Europäisches Patentamt

European Patent Office

Office européen des brevets

(11) Publication number: **0 106 502**
**B1**

(12) **EUROPEAN PATENT SPECIFICATION**

(45) Date of publication of patent specification: **13.05.87**

(51) Int. Cl.⁴: **F 16 D 65/56**

(21) Application number: **83305235.0**

(22) Date of filing: **08.09.83**

(54) **Automatic slack adjuster.**

(30) Priority: **20.09.82 US 420211**

(43) Date of publication of application:
**25.04.84 Bulletin 84/17**

(45) Publication of the grant of the patent:
**13.05.87 Bulletin 87/20**

(84) Designated Contracting States:
**DE FR GB IT SE**

(56) References cited:
**EP-A-0 039 479**
**EP-A-0 072 116**
**DE-B-1 575 825**
**US-A-3 507 369**
**US-A-3 545 578**
**US-A-3 901 357**
**US-E- 26 965**

(73) Proprietor: **EATON CORPORATION**
**100 Erieview Plaza**
**Cleveland Ohio 44114 (US)**

(72) Inventor: **Broucksou, Robert Henry**
**8260 Valleywood Lane**
**Portage Michigan 49002 (US)**

(74) Representative: **Douglas, John Andrew**
**Eaton House Staines Road**
**Hounslow Middlesex TW4 5DX (GB)**

Courier Press, Leamington Spa, England.

## Description

Background of the Invention
*Field of the Invention*
The present invention relates to automatic slack adjusters of the force or clearance sensing type and more particularly to a force sensing, automatic, single acting (i.e. operates automatically in the slack take-up direction only) slack adjuster of the type utilizing a torque limited one-way drive assembly, such as a roller or sprag clutch drive assembly, to limit adjuster torque applied to a rotatable adjustment member.

*Brief Description of the Prior Art*
Automatic slack adjusters for railway brakes and automotive brakes of both the disc and drum type are well known. In particular, single acting automatic vehicle slack adjusters of the force sensing type (also called the clearance sensing type) wherein the adjustment mechanism will sense the forces in the brake system and either disengage the adjustment mechanism or slip when forces exceed a predetermined level, usually corresponding to an expected resistance to rotation of an adjustment member when the brake drums or discs are contacted by the movable friction elements, to prevent over adjustment are well known and may be appreciated in greater detail by reference to U.S. Patents Nos. RE 26,965 and 3,507,369, both of which are hereby incorporated by reference. Clearance sensing slack adjusters wherein a torque limited friction clutch of the coil slip clutch type is utilized to limit torque applied to an adjustment member are also known as may be seen by reference to U.S. Patents Nos. 3,507,369 and 3,901,357, hereby incorporated by reference.

The use of one way clutches in clearance sensing type automatic slack adjusters is also known in the prior art. However, as the prior art one way roller and sprag clutches are not easily suitable for torque limiting operation, an additional separate torque limiting clutch was also required.

While the automatic clearance sensing slack adjusters of the prior art have been generally well received, certain of the prior art devices were not totally satisfactory as the torque limited coil clutches were extremely sensitive to variations in friction and lubrication, a second one way clutch was required and/or manual adjustment was difficult and/or required a complicated and/or expensive mechanism making manufacture and maintenance of such automatic slack adjusters more difficult and/or expensive.

DE—B—1 575 825 discloses the preamble to Claims 1 and 8, featuring a one-way torque limiting clutch of the wedge type. The driving clutch race is drivingly connected to drive a rotatable member, e.g. to take up slack. The driven race is rotationally fixed in location. Another one-way drive, i.e. a ratchet is needed, in order to prevent return after taking up each measure of slack. Ratchets can only transmit one-way drive, e.g. take up slack, in steps; which leaves either too little play for periods e.g. during which constant brake rubbing may be present, or too much play for periods of relatively slow brake response.

In contrast, the present invention proposes using a wedge-type clutch to transmit rotational drive, not to stop a part rotating. The rotatable member is driven directly through the clutch, indeed from wedge members, via a connecting member connecting the wedge members to the rotatable member. Slack take-up is continuous, and the avoidance of a ratchet also means that only a single one-way device suffices to provide the unidirectional feature inherent in taking up slack. This invention is defined in Claims 1 and 8, in one-way drive and automatic slack adjuster aspects, respectively.

Summary of the Invention
In accordance with the embodiments, the drawbacks of the prior art have been overcome or minimized to the extent that an automatic clearance sensing slack adjuster of the type utilizing a torque limited one way clutch drive assembly, such as a roller or sprag clutch drive assembly, to limit torque applied to the adjustment member in the slack take-up direction of rotation, to present unintended back off of the slack adjuster and to allow relatively easy manual back off of the adjuster is provided. The above is accomplished by utilizing a single one way torque limited clutch drive assembly, preferably a roller or sprag clutch type drive assembly to rotate an adjustment member in the slack take-up direction of rotation thereof, to release the adjustment member during the release of the brake to prevent undesirable back off of the adjustment member and to allow free manual rotation of the adjustment member in the slack increasing direction of rotation thereof.

In the preferred embodiment, the torque limited one way roller clutch type drive assembly comprises a driving race which frictionally drives a driven race through rollers received in ramps provided in the surface of the driven race. A biasing means is provided, preferably leaf springs, to bias the rollers into an initial wedging contact position in the ramps and a pin is received in each ramp which is rotationally fixed to the rotational adjustment member and which is acted upon by the rollers to rotate the adjustment member in the slack decreasing direction of rotation thereof when the rollers are in a wedged position between the driven and driving race. The resistance to rotation of the pins in the slack decreasing direction of rotation thereof will tend to urge the rollers out of wedging engagement between the driving and driven races. The rolling friction forces of the driving race, in combination with the forces of biasing means, on the rollers is greater than the resistance to rotation of the pins when the brake friction members are not in contact but is less than the resistance to rotation of the adjustment member when the brake friction members are in contact. Means are provided to automatically rotate the driving race in response to movement of the friction means toward engagement and a predetermined amount of lost motion or back lash is provided at an appropriate place in the slack adjuster drive train to maintain a desired running clearance between the friction members as is well known in the art.

Accordingly it is an object of the present invention to provide a new and improved automatic slack adjuster of the clearance sensing type.

Another object of the present invention is to provide an improved single action clearance sensing slack adjuster of the type utilizing a single clutch of the torque limited one way roller or sprag clutch drive assembly type.

These and other objects and advantages of the present invention will become apparent from a reading of the detailed description of the invention taken in connection with the drawings.

Brief Description of the Drawings

FIG. 1 is a partial sectional view of a wedge or linear cam actuated disc brake utilizing the automatic slack adjuster of the present invention.

FIG. 1A is a partial view of a portion of the slack adjuster of FIG. 1.

FIG. 2 is a partial sectional view of the one way torque limited roller clutch drive assembly of FIG. 1 and 1A.

FIG. 2A is a partial view taken along line 2A—2A in FIG. 2.

FIG. 3 is a schematic illustration of the slack adjuster of the present invention as utilized in connection with a cam actuated, expanding shoe drum brake.

FIG. 3A is a partial view of a cam actuated drum brake utilizing the adjuster of FIG. 3.

FIG. 4 is a partial sectional view similar to FIG. 2 of an alternate one way torque limited sprag clutch drive assembly.

Description of the Preferred Embodiment

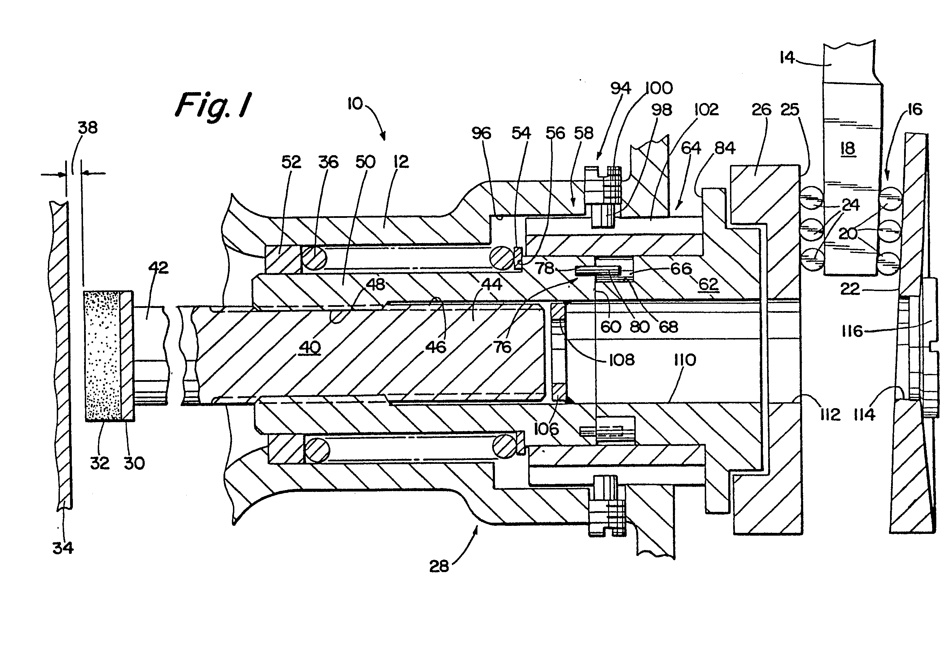

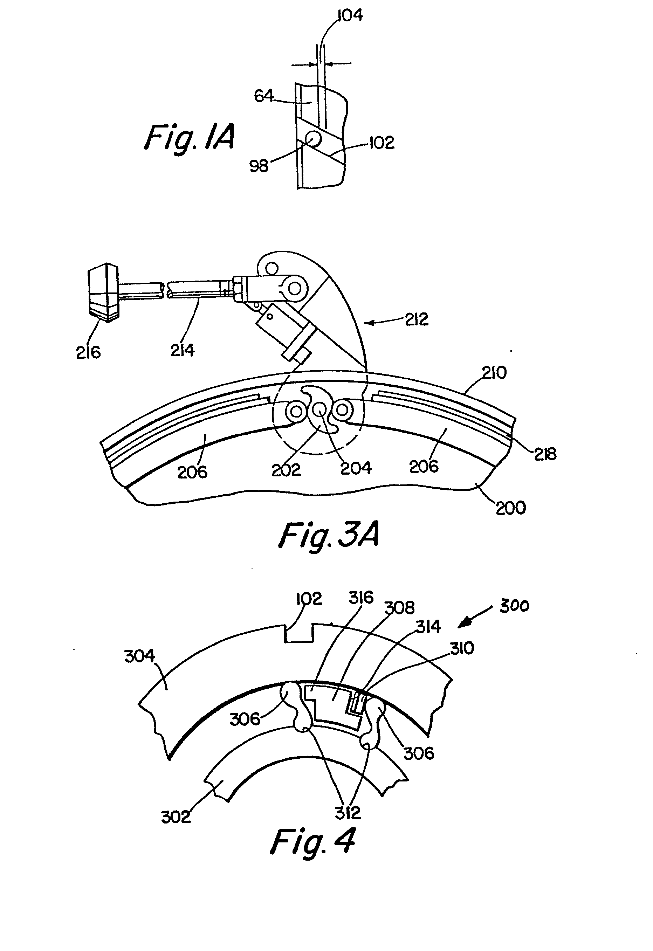

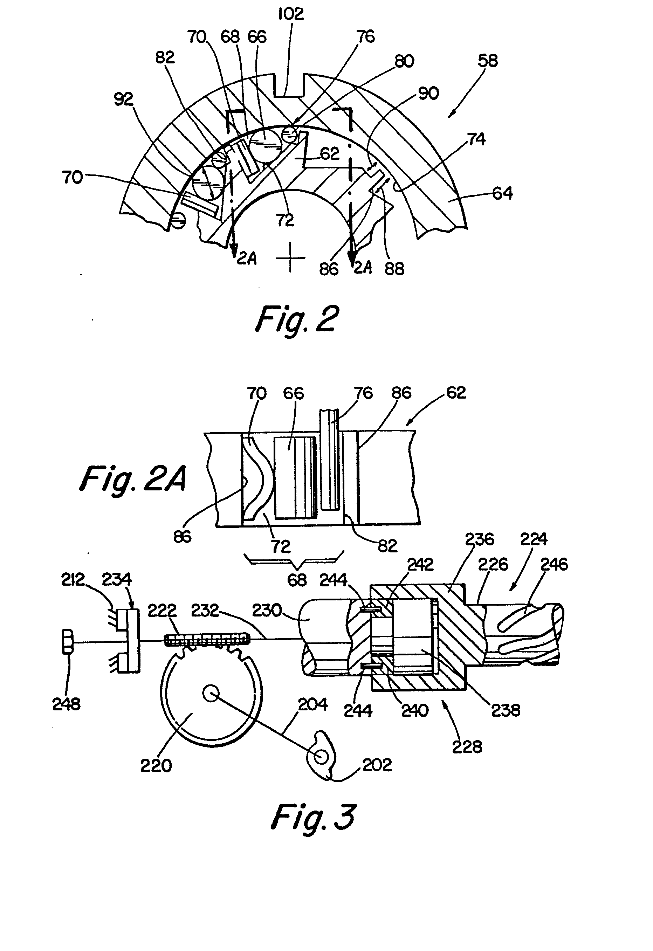

Certain terminology will be used in the following description for convenience in reference only and will not be limiting. The words "upwardly," "downwardly," "rightwardly," and "leftwardly" will designate directions in the drawings to which reference is made. The words "clockwise" and "counterclockwise" will designate directions of rotation as viewed from the right of FIG. 1 or as seen in FIG. 2. The words "inwardly" and "outwardly" will refer to direction toward and away from, respectively, the geometric center of the device and designated parts thereof. Said terminology will include the words above specifically mentioned, derivatives thereof and words of similar import.

One embodiment of the automatic slack adjuster of the present invention is illustrated as utilized with a disc brake wedge type actuator in FIG. 1. It is understood the term "brake" as used herein includes various known types of frictional couplings such as brakes, clutches and the like. The disc brake actuator-adjuster assembly 10 comprises a housing 12 which is mountable to a caliper (not shown) such as a floating caliper or the like. The specific structure of the housing 12 and of the caliper forms no part of the present invention. An actuator motor, such as a well known fluid or air motor (not shown) is mountable to housing 12. The actuator is selectively actuatable to force push rod 14 downwardly from the position shown in the drawing and a motor return spring (not shown) will return the push rod to the illustrated position. A roller cage assembly 16 is mounted to the end 18 of the push rod for linear movement therewith. One roller or set of rollers 20 provides a bearing contact between the rod end 18 and inclined surface 22 of housing 12. The other roller, or set of rollers, 24, provides a force transmitting drive connection between the rod end 18 and surface 25 of tappet member 26 of the plunger assembly 28. The specific structural relationship of the push rod end 18, the roller cage 16 and surfaces 25 and 22 may be modified as is well known in the art and forms no part of the present invention. Wedge type actuators are illustrated in the U.S. Patent Nos. 3,547,229; 4,064,973 and 4,085,830 all of which are hereby incorporated by reference.

Of course, the wedge actuator assembly could be replaced by a power screw and/or helical ramp assembly as is known in the art.

A brake shoe 30 carrying a friction lining 32 of a suitable friction material is mounted to the other (left) end of the plunger assembly 28. A disc 34 is located between shoe 30 and another shoe (not shown) and the shoe 30 will be forced leftwardly by the wedging action of the roller cage assembly 16 on tappet 26 to frictionally contact disc 34 to retard rotary motion thereof. A return spring 36 is effective to urge plunger assembly 28 to the right to maintain the tappet 26 in contact with the roller cage assembly 16 and to maintain a running clearance, or slack, 38, between the friction material and the disc when the brake is not applied.

As is well known, to maintain the fluid motor stroke within its effective range and to maintain proper actuation time, the running clearance 38 should be maintained within predetermined limits. Thus, as the friction pad 32 wears, the brake shoe 30 should be advanced leftwardly relative to tappet 26 to take-up the slack. Such slack take-up may be accomplished manually or by an automatic slack adjuster which will sense greater than allowed leftward movement of the plunger assembly 28 from its rightward most or released position and adjust the position of shoe 30 relative to the tappet 26 in response thereto. If a clearance sensing or forced sensing type automatic slack adjuster is utilized, the adjuster will sense when the pads engage the disc and cease adjustment at that point to prevent overadjustments in response to mechanical deflections, elasticity and the like.

The plunger assembly 28 comprises an elongated rod 40 which is axially movable but non-rotationally fixed to housing 12. Any known means, such as a splined connection (not shown) between the housing and the rod for such a non-rotational connection is possible and the specific structure utilized forms no part of the present invention. One end 42 of the rod 40 carries the brake shoe 30 while the other end 44 of the rod 40 carries external threads 46 which are threadably engaged with internal threads 48 carried by nut member 50. In the embodiment shown, threads 46 and 48 are lefthand threads.

Nut member 50 is axially and rotatably movable in housing 12 and will move axially with tappet 26. Accordingly, nonrotational axial movement of nut member 50 will result in equal axial movement (disregarding mechanical deflections and elasticity) of rod 40 and shoe 30 while rotational movement of nut member 50 relative to rod 40 will result in a variation in the axial distance between shoe 30 and tappet 26. Nut member 50 is thus a rotational adjustment as rotation of nut member 50 may be utilized to adjust the running clearance or slack 38. It is understood that the nut member 50 could be rotationally fixed in the housing and the rod member 40 rotatable to achieve a slack adjustment and such a modification is contemplated within the scope of the present invention.

An anti-friction bearing 52 supports nut 50 for rotational and axial movement relative to housing 12 and provides a leftward spring seat for return spring 36 compressed between bearing 52 and a spring seat washer 54 abutting shoulder 56 on nut 50 to urge the plunger assembly rightwardly as seen in FIG. 1. Of course, other types of return springs and or other locations of return springs may be utilized as is well known in the art.

The plunger assembly 28 further comprises a one way torque limited roller clutch type drive assembly 58 partially rotatably surrounding nut 50 and abutting righthand end surface 60 thereof for axial movement therewith. As may be seen by reference to FIGS. 1, 2 and 2A, the one way torque limited roller clutch drive assembly 58 comprises an inner or driven race 62 abutting the tappet 26, an outer or driving race 64 surrounding the inner race 62, a plurality of rollers 66 received between the inner and outer races in ramp cavities 68 provided in the exterior surface of inner race 62, a plurality of leaf springs 70 biasing the rollers 66 clockwise or up the ramp surfaces 72 into initial wedging engagement with the inner diameter surface 74 of the outer race 64 and a plurality of pin type connecting members 76 having one end 78 pressed into the nut member 50 for rotation therewith and the other end 80 received in the ramp cavities interposed the rollers 66 and the radially outwardly extending end walls 82 at the most radially outward end of ramp surfaces 72. As may be seen, the rightward end of outer race 64 surrounds inner race 62 and abuts with a radially outward shoulder 82 of the inner race 62 for axial movement therewith. Accordingly, tappet 26, inner race 62, outer race 64 and nut 50 will move axially leftwardly as a unit under the influence of roller cage assembly 16 and axially rightwardly as a unit under the influence of return springs 36.

As may be seen by reference to FIGS. 2 and 2A, each ramp cavity 68 is defined by a counterclockwise most end wall 86 having a height 88, a clockwisely radially outwardly extending ramp surface 72 and a clockwise most end wall 82 having a height 90. The rollers 66 have a diameter 92 which is less than height 88 but is greater than height 90. In the position shown in FIG. 2, leaf springs 70 bias the rollers 66 clockwise in the ramp cavities 68 to a position wherein the rollers are initially wedged between the inner surface 74 of outer race 64 and the ramp surfaces 72. Rollers 66 may be urged counterclockwise against the bias of leaf spring 70 to a position whereat the outer circumference of the rollers will not contact the inner surface 74 of outer race 64 and/or the ramp surface 72 whereby the outer race 64 may rotate independently of the inner race 62 and rollers 66. As pin members 76 are rotatably moved in the clockwise direction by abutting rollers 66, rotation of outer race 64 independently of inner race 62 and rollers 66 will result in rotation of outer race 64 independently of pins 76 and nut 50 which rotates therewith.

As is known from the roller clutch art, clockwise rotation of the outer or driving race 64 in combination with the clockwise bias supplied by leaf springs 70, will result in causing rollers 66 to move clockwise (i.e. to roll clockwise on ramped surfaces 72) and wedge between the outer and inner races resulting in the inner race and rollers 66 rotating clockwise with outer race 64. Any resistance to clockwise rotation of pins 76, and nut 50 which rotates therewith will result in the rollers 66 being urged counterclockwise relative to inner race 62 against the bias of leaf springs 70 allowing the outer race 64 to rotate independently of inner race 62, rollers 66 and pin members 76. Counterclockwise rotation of outer race 64 will urge the rollers 66 clockwise against the bias of leaf springs 70 allowing the outer race 64 to rotate independently of the inner race 62 the rollers 66 and the pins 76. Accordingly, the clockwise torque which may be transferred by driving outer race 64 to the inner race 62 and pin members 76 is limited to that mount of torque required to overcome the clockwise bias of leaf springs 70 and the tendency of rollers 66 to be moved clockwise by the action of inner surface 74 of driving race 64. Roller clutch drive assembly 58 is thus a one way (clockwise) torque limited drive assembly. It is important to note that the rotary adjustment member, nut 50, is driven by the pins 76 and not by the inner race 62 and that the pins 76 which are subject to resistance to clockwise rotation of nut 50 provide the force sensing means for the torque limited drive 58.

Of course, the inner race could be modified to be the driving race if provided with a smooth exterior surface and the outer race modified to be the driver race by provision of clockwisely radially inwardly extending ramped cavities in the internal surface thereof.

At least one indexing member 94, see FIGS. 1 and 1A, is fixed to housing 12 and extends radially inwardly into housing bore 96. Indexing member 94 may comprise a shaft member 98 and a threaded headed section 100. The shaft 98 is received in generally helical groove 102 formed in the outer periphery of driving race 64 with a predetermined amount of clearance or backlash 104 therebetween (shown in a slightly exaggerated form in FIG. 1A.) Accordingly, axial movement of plunger assembly 28 to the left by greater than distance 82, the axial component of the clearance between shaft 98 and groove 102, will result in a clockwise, viewed from the right end of FIG. 1, rotation of driving race 64. Backlash 104 is selected so that it, in combination with other backlash in the plunger assembly, will approximately equal the predetermined running clearance 38. It is understood, that although the backlash or lost motion 104 necessary to provide running clearance 38 is illustrated as occurring between shaft 98 and groove 102, such lost motion could be provided at various points in adjuster assembly 10 such as for example in the connection between pin end 78 and nut 50 and/or between threads 46 and 48 and/or between pins 76 and roller members 66.

Drive assembly 58 provides a rotational driving connection between the driven outer race 64 and the nut member 50 in the clockwise direction of rotation only. Counterclockwise rotation of driving outer sleeve 64 will not result in a counterclockwise rotation of nut 50. This is due to the inherent operating characteristics of a roller type clutch and due to the fact that the inherent resistance to rotation of nut 50 in both directions of rotation is sufficient to overcome the bias of leaf springs 70. Drive assembly 58 will transmit torque in the clockwise direction from driven race 64 to pins 76, and nut member 50 which rotates therewith, with a torque capacity of about 200 inch-pounds of torque. It has been found that, in an adjuster of the type contemplated, 200 inch-pounds of torque is sufficient to overcome frictional resistances and to rotate pins 76 and nut member 50 to axially advance, (i.e. move leftwardly) the position shoe 30 if the linings 32 have not contacted the disc 34, but is insufficient to rotate pins 76 and nut 50 if the linings 32 have contacted the disc. Drive assembly 58 thus acts as a torque limiting one way coupling for clearance sensing purposes in the clockwise or slack decreasing direction of rotation.

The return spring 36 acts upon spring seat 54 to bias the plunger assembly 28 toward the roller cage assembly 16 and also provides a resistance to rotation of nut member 50 which exceeds any torque transmitting capacity of the drive assembly 58 in the counterclockwise, or slack increasing, direction of rotation.

The nut member 50 is provided with a washer type member 106 nonrotatably attached in the inner bore thereof at the righthand end thereof. Washer 106 is provided with a configured fitting 108 designed to receive a tool head, such as an allen wrench or the like. Configured fitting 108 is aligned with a bore 110 provided in the inner race, a bore 112 provided in the tappet 26 and a bore 114 provided in the housing 12. Bore 114 in the housing 12 is provided with a removable plug or sealing member 116 allowing access to fitting 108 from the exterior of disc brake 10 for manual rotation of nut member 50.

In operation, when the brake is to be engaged, the actuator fluid motor forces push rod 14 and roller cage assembly 17 downwardly, causing the roller cage assembly to act against inclined surface 22 to force tappet 26 and the remainder of the plunger assembly 28 leftwardly to engage the friction pads 30 with the disc. If the leftward axial movement of the plunger assembly is less than the backlash or lost motion 104, the driving race 64 will not be rotated.

However, if the running clearance 38 has become excessive and/or the forces of the braking operation create mechanical deflections in the brake assembly, the plunger assembly will move leftwardly by a distance greater than the distance 104 and the shaft 98 will engage the groove 102 in driving race 64 causing the driving race to be rotated in a clockwise direction. Clockwise rotation of outer driving race 64 will result in the rollers 66, which are urged into a prewedged initial position by leaf springs 70, to be wedged between the outer race 64 and the inner race 62 resulting in a clockwise rotation of rollers 66 pins 76 and inner race 62 with the outer driving race 64. Such clockwise roation of pins 76, and the nut member 50 which rotates therewith, will commence and/or continue until the resistance to clockwise rotation of pins 76 is sufficient to overcome the bias of spring 70 and the frictional effects of inner surface 74 and ramp surface 72 and to move the rollers 66 counterclockwise relative to the ramp cavities 68 allowing the driving outer race 64 to rotate clockwise independently of the pins 76 and the inner race 62. The maximum clockwise torque transferred to the nut member 50 will thus be limited by the torque transmitting capacity of the drive assembly 58 in the clockwise direction of rotation and such limit will be less than the torque necessary to rotate the nut member 50 when the friction material 32 is in contact with the disc 34. Accordingly, excessive axial movement of the plunger assembly 28 will result in rotation of nut member 50 and advancement of rod 40 and shoe 30 toward the disc to take-up excessive slack provided the torque required to rotate nut 50 does not exceed the torque transmitting capacity of the drive assembly 58. At such time as the shoe 30 firmly contacts the disc, further leftward movement of the plunger assembly will be the result of mechanical deflections or the like and will not result in overadjustment of the brake as the torque required to rotate nut member 50 will exceed the torque transmitting capacity of drive assembly 58 at which point the outer driven race 64 will rotate independently.

Upon release of the brake, push rod 14 will be upwardly retracted and the entire plunger assembly 28 will move rightwardly under the bias of return spring 36 to the at rest shown in FIG. 1. If outer driving race 64 was rotated clockwise in the application stroke, it will be rotated in the counterclockwise direction during the return stroke. As the outer race 64 will rotate independently of the rollers 66, pin 76 and inner race 62 in the counterclockwise direction (as a result of friction in the system) the nut member 50 will not be subject to undesirable back off during the release of the brake.

When it is desired to manually back off the adjuster (i.e. increase slack) for maintenance or the like, plug 116 is removed and a tool is inserted through bores 114, 112 and 110 into fitting 108 and nut member 50 is rotated in the counterclockwise direction. Rotation of nut member 50 in the counterclockwise direction will result in pin member 76 urging rollers counterclockwise relative to ramp cavities 68 against the bias of leaf spring 60 allowing the inner race 62, the pin members 76, the rollers 66 and the leaf springs 70 to rotate counterclockwise relative to outer race 64 independently of outer race 64 and without the requirement for overcoming any frictional coupling between the pin members, rollers or inner race with outer race 64. Accordingly, to manually rotate the nut member 50 in the counterclockwise direction, a torque exceeding the torque required to overcome the bias of leaf springs 70 is sufficient. In practice, the torque required to overcome the bias of leaf springs 70 is relatively minimal and does not required excessive effort.

An alternate embodiment of the present invention as utilized with a cam operated expanding shoe drum brake is schematically illustrated in FIGS. 3 and 3A. In FIG. 3A a drum brake assembly comprising a support 200 rotatably supporting a brake actuation cam 202 nonrotatably fixed to a cam shaft 204 for pivoting arcuate brake shoes 206 radially outwardly into frictional contact with a brake drum 210 is illustrated. A lever assembly 212 is adjustably rotationally fixed to cam shaft 204 and is pivotable under the action of rod 214 which is driven by an actuation motor such as fluid motor 216. As is known, the slack adjuster is housed in lever 212 and is effective to control the running clearance between brake shoes 218 and drum 210 by adjustment of the rotational position of operating cam 202 relative to the lever 212.

Briefly, operating cam 202 is selectively rotatable to cause expansion of pivotable brake shoes 206 into frictional contact with rotatable brake drum 210 to retard rotational motion of the brake drum. The rotational position of cam 202 relative to the actuating lever housing 212 is utilized to adjust the running clearance between the shoes and drums to compensate for wear and the like. Drum brakes utilizing such adjusters are well known in the art and may be appreciated in greater detail by reference to the above mentioned U.S. Patent No. 3,507,369.

Cam 202 is fixed to a cam shaft 204 which in turn is fixed to a worm gear 220 rotatably mounted in the lever housing 212. A worm 222 is rotatably mounted in the lever housing and engaged with worm gear 220. Controlled rotation of the worm 222 and resulting controlled rotation of worm gear 220, the cam member or shaft 204 and the cam 202 relative to the lever housing 212 is effective to adjust the running clearance or slack of the brake. The worm (and worm shaft) is thus a rotatable adjustment member. The automatic clearance sensing slack adjuster 224 includes a driving shaft 226, a one way torque limited roller clutch drive assembly 228 and a driven shaft 230. Driven shaft 230 may be integral with or rotatably associated with worm shaft. Shafts 226 and 230 are rotatably received within housing 212. Worm shaft 232, which may be integral with driven shaft 230 is preferably frictionally grounded to housing 212, as at friction clutch 234. Drive assembly 228 is functionally and structurally substantially identical to drive assembly 58 described above in connection with FIGS. 1 and 2. Drive assembly 228 includes an outer driving race 236 which is driven by and may be integral with driving shaft 226, an inner driven race 238 which is provided with ramp cavities 240 in which are received rollers 242 and pin members 244 which are fixed for rotation with driven shaft 230. The operation and the structure of the functional elements of drive assembly 228 is identical or substantially identical to that of drive assembly 58 discussed above and will not be repeated herein. Means are provided, such as helical splines 246, to impose a clockwise rotation to driving shaft 226 in response to lever 212 being rotated beyond a predetermined angular departure from the at rest position thereof, such an angular departure being indicative of greater than desired running clearance and/or of mechanical deflection. The worm and worm gear are configured such that clockwise rotation of the worm 222 will advance the cam 202 in the slack decreasing or slack take-up direction of rotation.

The adjuster mechanism also includes a fitting, such as hex-shaped shaft end 248 accessible from the exterior of the housing 212 for manual back off of the slack adjuster. Frictional grounding clutch 234, in combination with the other frictional resistances to rotation in the system, provides a torque resisting rotation of the worm shaft 232 greater than any counterclockwise torque transfer capacity of one way drive assembly 228 to prevent undesirable back off during counterclockwise rotation of outer race 236 during a brake release operation.

An alternate one way clutch drive assembly 300 may be seen by reference to FIG. 4. Drive assembly 300, which is of the sprag clutch type, is functionally similar to one way torque limited roller clutch drive assembly (58) described above.

Drive assembly 300 comprises an inner or driven race 302 which may be adapted to abut tappet 26, an outer or driving race 304 surrounding the inner race 302, a plurality of sprags 306 received between the inner and outer races, a plurality of block/pin members 308 having one end fixed for rotation with nut 50 and a plurality of leaf springs 310. Sprags 306 have their radially inner ends pivotably received in grooves or pivot cavities 312 provided in the inner race and are urged to pivot in a clockwise direction by the leaf springs 310 which are seated in grooves 314 provided in the block/pin members 308. Block/pin members 308 are also provided with counterclockwise extending projections 316, which upon relative counterclockwise movement thereof relative to the outer race, will cause the sprags to pivot in a counterclockwise direction to allow the outer race to rotate independently of the sprags, block/pin members and inner race. The outer race 304 is provided with a groove 102 which is for the same function as groove 102 provided in outer race 64 of drive assembly 58.

As is known, clockwise pivotal movement of sprags 306 will result in sprags 306 wedging between races 304 and 302 upon a clockwise rotation of driving race 304 whereby inner race 302, sprags 306 and block/pin members 308 will be driven in the clockwise direction. Leaf springs 310 are selected to provide a clockwise bias to the radially outer ends of sprags 306 which will overcome the counterclockwise resistance provided by projections 316 of block/pin members 308 at a resistance to rotation of nut member 50 below that expected when the friction surfaces are in contact. At a higher resistance to rotation of nut member 50, the rotational drag of projections 316 will overcome the bias of leaf springs 310 and the radially outer ends of sprags 306 will pivot in a counterclockwise direction allowing driving race 306 to rotate independently of nut 50.

Although this invention has been described in its preferred embodiment with a certain degree of particularity, it is understood the present disclosure of the preferred form has been made only by way of example and that numerous changes in the detail of construction and combination and arrangement of parts may be resorted to without departing from the spirit and the scope of the invention as hereinafter claimed.

## Claims

1. A one-way torque limited clutch drive assembly (58) for rotating a rotatable member (50) about an axis in a given direction of rotation against less than a predetermined resistance to rotation of said rotatable member in said given direction of rotation, said drive assembly comprising:

a) an inner clutch race (62) defining a generally cylindrical outer diameter confronting surface, said inner clutch race being rotatable about said axis;

b) an outer race (64), defining a generally annular inner diameter confronting surface (74) surrounding said outer diameter confronting surface and radially spaced therefrom, said outer clutch race being rotatable about said axis;

c) driving means (94—102) for rotating one of said inner and outer clutch races, the confronting surface (74) of said one clutch race being substantially smooth;

d) cavities (68) formed in the confronting surface of the other of said inner and outer clutch races;

e) a wedge member (66, 242, 306) received in each of said cavities, said wedge members having a first circumferential position relative to said cavities wherein said wedge member will wedge between said inner and outer clutch races to provide a non-rotational connection therebetween in one direction of rotation and a second circumferential position relative to said cavities allowing said one clutch race to rotate independently of said other clutch race and said wedge members;

f) a biasing means (70) biasing said wedge members circumferentially toward said first circumferential position whereby rotation of said one clutch race in said given direction of rotation will tend to cause said wedge members to wedge between said confronting surfaces (72, 74); characterized in that:

g) said one direction is in said given direction of rotation, the driving connection being thus provided in said given direction, and connecting members (76, 244, 308) are provided, each having one end (80) thereof relatively circumferentially moveably received between said confronting surfaces (72, 74), said connecting members being circumferentially interposed said wedge members, said connecting members being engageable with said wedge members for rotation with said wedge members (66) about said axis in said given direction of rotation, the other end (78) of said connecting members being attached to said rotatable member (50) for rotation about said axis therewith in both directions of rotation, the resistance to rotation about said axis in said given direction of rotation of said connecting members causing said connecting members to engage said wedge members to resist said wedge members moving circumferentially toward said wedged position under both the bias of said biasing means and the tendency of said wedge members to move toward said wedged position.

2. The drive assembly of claim 1 wherein the resistance to rotation of said rotatable member (50) in said given direction of rotation equal to or exceeding said predetermined resistance to rotation will result in said connecting members engaging said wedge members with a resistance sufficient to overcome both the bias of said biasing means the the tendency of said wedge members to move toward said first circumferential position sufficiently to allow said one clutch race to rotate independently of said other clutch race and said wedge members.

3. The drive assembly of claim 2 wherein said cavities comprise ramp cavities (68) formed in the confronting surface of the other of said inner and outer clutch races, said ramp cavities defined by a first generally radially extending end wall (86) having a first height (88), a circumferentially extending and radially inclined ramp surface (72) extending from the end of said first end wall most distance from said confronting surfaces radially toward said confronting surfaces in the direction of said given direction of rotation to a generally radially extending second end wall (82) having a second radial height (90), said second height less than said first height;

said wedge members each comprise a roller member (66) received in each of said ramp cavities, said roller member having a diameter (92) smaller than the radial spacing of the intersection of said first end wall and said ramp surface from said smooth confronting surface and greater than the radial spacing of the inner section of said second end wall and said ramp surface from said smooth confronting surface, said roller members having a first circumferential position relative to said ramp cavities toward said second end wall wherein said roller members will wedge between said inner and outer clutch races to provide a driving connection therebetween in said given direction of rotation and a second circumferential position relative to said ramp cavities toward said first end wall allowing said one clutch race to rotate independently of said other clutch race and said roller members; and

the connecting members each have one end relatively circumferentially moveably received in each of said ramp cavities, said connecting members circumferentially interposed said roller members and said second end wall, said connecting members engageable with said roller members for rotation with said roller members about said axis in said given direction of rotation.

4. The drive assembly of claim 3 wherein said biasing means comprises springs interposed said first end wall and said roller members.

5. The drive assembly of claim 4 wherein said springs are leaf springs.

6. The drive assembly of claims 4 or 5 wherein said outer race is said one race, said inner race is said other race and said ramp surfaces extend radially outwardly in said given direction of rotation.

7. The drive assembly of claim 2 wherein said cavities are pivot cavities (312) and said wedge members are each a sprag member (306) pivotably received in each of said pivot cavities, said sprag members having a length greater than the radial spacing of said cavities from said smooth confronting surface, said sprag members having a first pivotal position toward said given direction of rotation relative to said cavities wherein said sprag members will wedge between said inner and outer clutch races to provide a driving connection therebetween in said given direction of rotation and a second pivotal position relative to said cavities allowing said one clutch race to rotate independently of said other clutch race and said sprag members.

8. An automatic, single acting, clearance sensing slack adjuster (10) for maintaining a predetermined running clearance (38) between the selectively engageable friction surfaces (32—34) of a brake including a displaceable brake actuation means (26) a rotatable adjustment member (50), rotation of said adjustment member about its axis in a given direction of rotation effective to decrease slack in the brake and in the other direction of rotation to increase slack in the brake, and a one way torque limited drive assembly (58) for rotatably driving said adjustment member in said given direction of rotation, said drive assembly comprises:

a) an inner clutch race (62) defining a generally cylindrical outer diameter confronting surface, said inner clutch race being rotatable about said axis;

b) an outer clutch race (64) defining a generally annular inner diameter confronting surface (74) surrounding said outer diameter confronting surface and radially spaced therefrom, said outer clutch race being rotatable about said axis;

c) means (94—102) for automatically rotating said outer clutch race in response to predetermined displacement of said brake actuating means, the confronting surface of said outer clutch race being

d) substantially smooth, ramp cavities (68) formed in the confronting surface of the inner clutch race, said ramp cavities defined by a first generally radially extending end wall (86) having a first radial height (88), a ramp surface (72) extending circumferentially and radially inclined from the end of said first end wall most distance from said confronting surfaces radially outwardly toward said confronting surfaces in the direction of said given direction of rotation to a generally radially extending second end wall (82) having a second radial height (90) said second height less than said first height;

e) a roller member (66) received in each of said ramp cavities, said roller members having a diameter (92) smaller than the radial spacing of the intersection of said first end wall and said ramp surface from said smooth confronting surface and greater than the radial spacing of the intersection of said second end wall and said ramp surface from said smooth confronting surface, said roller members having a first circumferential position relative to said ramp cavities toward said second end walls wherein said roller members will wedge between said inner and outer clutch races to provide a driving connection therebetween in said given direction of rotation and a second circumferential position relative to said ramp cavities toward said first end wall allowing said one clutch race and said roller members;

f) biasing means (70) biasing said roller members circumferentially toward said second end walls into frictional contact with said smooth confronting surface and said ramp surfaces whereby rotation of said one clutch race in said given direction of rotation will tend to cause said roller members to roll on said ramp surface toward said second end wall; characterized in that

g) a connecting member (76) having one end thereof relatively circumferentially movably received in said ramp cavity, said connecting member circumferentially interposed said roller members and said second end wall, said connecting members engageable with said roller members for rotation with said roller members about said axis in said given direction of rotation, the other end of said connecting members attached to said rotatable adjustment member for rotation therewith about said axis in both directions of rotation, the resistance to rotation of said connecting members about said axis in said given direction of rotation sufficient to overcome the bias of said biasing means and the tendency of said rollers to roll on said ramp surface toward said first circumferential position as a result of rotation of said outer clutch race in said given direction of rotation sufficient to allow said outer clutch race to rotate independently of said inner clutch race and said roller members being greater than the torque required to rotate said adjustment member when said brake friction surfaces are not in contact but less than the torque required to rotate said adjustment member when said brake friction surfaces are in contact; and

h) means for (104) providing a predetermined lost motion between said means for rotating said outer clutch race and said adjustment member, said predetermined lost motion allowing a predetermined displacement of said brake actuation means without rotation of said adjustment member in said given direction of rotation.

9. The adjuster of claim 8 wherein said biasing means comprise springs interposed said first end walls in said roller members.

10. The adjuster of claims 8 or 9 wherein said adjustment member is subject to a frictional resistance to rotation and the torque transfer capacity of said drive assembly in said other direction of rotation is less than the torque required to overcome said frictional resistance to rotation of said adjustment member in said other direction of rotation.

**Patentansprüche**

1. In einer Richtung drehmomentbegrenzte Antriebskupplungsanordnung (58) zum Drehen eines drehbaren Gliedes (50) um eine Achse in eine vorgegebene Drehrichtung und gegen einen kleineren, als einem vorgegebenen Drehwiderstand des drehbaren Gliedes in der gegebenen Drehrichtung, wobei die Antriebsanordnung enthält;

a) eine innere Kupplungsbahn (62), die eine im wesentlichen zylindrische, nach außen weisende Gegenfläche bildet, wobei diese innere Kupplungsbahn um die Achse drehbar ist;

b) eine äußere Bahn (64), die eine im wesentlichen ringförmige, nach innen weisende Gegenfläche (74) bildet, die die nach außen weisende Gegenfläche umgibt und gegenüber dieser mit radialem Abstand angeordnet ist, wobei diese äußere Kupplungsbahn um die Achse drehbar ist;

c) Antriebsmittel (94—102) zum Drehen von einer, entweder der inneren oder der äußeren Kupplungsbahn, wobei die Gegenfläche (74) der einen Kupplungsbahn im wesentlichen glatt ist;

d) in der Gegenfläche der jeweils anderen, entweder der inneren oder der äußeren Kupplungsbahn ausgebildete Hohlräume (68);

e) jeweils einen in jedem der Hohlräume angeordneten Klemmkörper (66, 242, 306), wobei die Klemmkörper eine erste Stellung in Umfangsrichtung gegenüber den Hohlräumen aufweisen, in der sich die Klemmkörper zwischen der inneren und der äußeren Kupplungsbahn verklemmen, um eine drehfeste Verbindung zwischen diesen in einer Drehrichtung zu erzeugen, und die eine zweite Stellung in Umfangsrichtung gegenüber den Hohlräumen aufweisen, die es der einen Kupplungsbahn ermöglichen, sich frei von der anderen Kupplungsbahn und den Klemmkörpern zu drehen;

f) Vorspannmittel (70), die eie Klemmkörper in Umfangsrichtung auf die erste Stellung in Umfangsrichtung zu vorspannen, so daß eine Drehung der einen Kupplungsbahn in die vorgegebene Drehrichtung bestrebt ist, ein Einklemmen der Klemmkörper zwischen den Gegenflächen (72, 74) zu bewirken; dadurch gekennzeichnet:

g) daß die eine Richtung in der gegebenen Drehrichtung liegt, daß die antriebsmäßige Verbindung auf diese Weise in der gegebenen Richtung erzeugt wird, und daß Verbindungsglieder (76, 244, 308) vorgesehen sind,

von denen jedes ein Ende (80) aufweist, das gegenüber den Gegenflächen (72, 74) in Umfangsrichtung bewegbar zwischen diesen aufgenommen ist,

die in Umfangsrichtung zwischen den Klemmkörpern verteilt angeordnet sind,

die mit den Klemmkörpern in Eingriff bringbar sind, um mit den Klemmkörpern (66) um die Achse in der gegebenen Drehrichtung umzulaufen,

deren anderes Ende (78) an dem drehbaren Glied (50) befestigt ist, um mit diesem um die Achse in beiden Drehrichtungen umzulaufen, wobei der Drehwiderstand der Verbindungsglieder in die gegebene Drehrichtung um die Achse bewirkt, daß die Verbindungsglieder mit den Klemmkörpern in Eingriff kommen, um die Klemmkörper daran zu hindern, sich sowohl infolge der Vorspannung der Vorspannmittel als auch der Neigung der Klemmkörper sich in Richtung auf die Klemmstellung zu bewegen, in Umfangsrichtung auf die Klemmstellung zu zu bewegen.

2. Antriebsanordnung nach Anspruch 1, bei der der Drehwiderstand des drehbaren Gliedes (50) in die gegebene Drehrichtung, der dem vorbestimmten Drehwiderstand gleich ist oder diesen übersteigt, dazu führt, daß die Verbindungsglieder mit den Klemmkörpern mit einer solchen Gegenkraft in Eingriff kommen, die genügt, um sowohl die Vorspannung der Vorspannmittel als auch die Neigung der Klemmkörper sich in Richtung der ersten Stellung in Umfangsrichtung zu bewegen, so weit zu überwinden, daß die eine Kupplungsbahn sich frei von der anderen Kupplungsbahn und den Klemmkörpern drehen kann.

3. Antriebsanordnung nach Anspruch 2, bei der die Hohlräume rampenförmige Ausnehmungen (68) aufweisen, die in der Gegenfläche der anderen der beiden Kupplungsbahnen, der inneren bzw. der äußeren Kupplungsbahn ausgebildet sind, wobei die rampenförmigen Ausnehmungen von einer ersten, sich im wesentlichen radial erstreckenden Endwand (86) mit einer ersten Höhe (88) sowie von einer sich in Umfangsrichtung erstreckenden und radial geneigten Rampenfläche (72) begrenzt sind, die sich von dem von den Gegenflächen weiter entfernten Ende der ersten Endwand radial zu den Gegenflächen in Richtung der vorgegebenen Drehrichtung bis zu einer im wesentlichen radial verlaufenden zweiten Endwand (82) erstrecken, die eine zweite Höhe (90) in radialer Richtung aufweist, die kleiner ist als die erste Höhe;

bei der die Klemmkörper jeweils von einem Rollenglied (66) gebildet sind, das in jeder der rampenförmigen Ausnehmungen sitzt und die einen Durchmesser (92) aufweisen, der kleiner ist als der radiale Abstand, den die Schnittkante der ersten Endwand mit der Rampenfläche von der glatten Gegenfläche hat, und der größer ist als der radiale Abstand, den die Schnittkante der zweiten Endwand mit der Rampenfläche von der glatten Gegenfläche hat, wobei die Rollenglieder eine erste Stellung in Umfangsrichtung gegenüber den rampenförmigen Ausnehmungen in Richtung auf die zwiete Endwand aufweisen, in der die Rollenglieder sich zwischen der inneren und der äußeren Kupplungsbahn einklemmen, um eine drehfeste Verbindung zwischen diesen in der gegebenen Drehrichtung zu erzeugen, sowie eine zweite Stellung in Umfangsrichtung, bezogen auf die rampenförmigen Ausnehmungen, aufweisen, die in Richtung auf die erste Endwand liegt, um es der einen Kupplungsbahn zu ermöglichen, sich frei von der anderen Kupplungsbahn sowie den Rollengliedern zu drehen; und

bei der die Verbindungsglieder jeweils mit einem Ende in einer jeweiligen rampenförmigen Ausnehmung gegenüber dieser in Umfangsrichtung beweglich aufgenommen sind, wobei die Verbindungsglieder in Umfangsrichtung zwischen den Rollengliedern und der zweiten Endwand angeordnet sind und mit den Rollengliedern in Eingriff bringbar sind, um mit den Rollengliedern in der gegebenen Drehrichtung um die Achse umzulaufen.

4. Antriebsanordnung nach Anspruch 3, bei der die Vorspannmittel Federn enthalten, die zwischen der ersten Endwand und den Rollengliedern angeordnet sind.

5. Antriebsanordnung nach Anspruch 4, bei der die Federn Blattfedern sind.

6. Antriebsanordnung nach Anspruch 4 oder 5, bei der die äußere Bahn die eine Bahn sowie die innere Bahn die andere Bahn ist und die Rampenflächen sich radial nach außen in die gegebene Drehrichtung erstrecken.

7. Antriebsanordnung nach Anspruch 2, bei der die Hohlräume Schwenklagerausnehmungen (312) und die Klemmkörper jeweils Klemmklötze (306) sind, die schwenkbar in jeder der Schwenklagerausnehmungen gelagert sind, wobei die Klemmklötze eine Höhe aufweisen, die größer ist als der radiale Abstand der Schwenklagerausnehmungen von der glatten Gegenfläche, und eine erste Schwenkstellung, bezogen auf die Ausnehmung in Richtung auf die gegebene Drehrichtung, in der die Klemmklötze sich zwischen der inneren und der äßeren Kupplungsbahn einklemmen, um eine drehfeste Verbindung zwischen diesen in der gegebenen Drehrichtung herzustellen, sowie eine zweite Schwenkstellung, gegenüber den Ausnehmungen aufweisen, die es der einen Kupplungsbahn ermöglichen, sich frei gegenüber der anderen Kupplungsbahn und den Klemmklötzen zu drehen.

8. Das Betätigungsspiel erfassende, automatische, in einer Richtung wirksame Nachstellvorrichtung zum Aufrechterhalten eines vorbestimmten Betriebsspaltes (38) zwischen wahlweise miteinander in Eingriff zu bringenden Reibflächen (32—34) einer Bremse, die ein bewegbares Bremsbetätigungsglied (26), ein drehbares Einstellglied, dessen Drehung um seine Achse in einer gegebenen Drehrichtung die Verminderung des Betätigungsspiels in der Bremse und die Drehung in der anderen Richtung die Vergrößerung des Betätigungsspiels in der Bremse bewirkt, sowie eine in einer Drehrichtung drehmomentbegrenzende Antriebsanordnung (58) aufweist, um das Einstellglied in der gegebenen Drehrichtung drehend anzutreiben, wobei die Antreibsanordnung enthält:

a) eine innere Kupplungsbahn (62), die eine im wesentlichen zylindrische, nach außen weisende Gegenfläche bildet, wobei diese innere Kupplungsbahn um die Achse drehbar ist;

b) eine äußere Kupplungsbahn (64), die eine im wesentlichen ringförmige, nach innen weisende Gegenfläche (74) bildet, die die nach außen weisende Gegenfläche umgibt und gegenüber dieser mit radialem Abstand angeordnet ist, wobei diese äußere Kupplungsbahn um die Achse drehbar ist;

c) Mitteln (94—102) zum selbsttätigen Drehen der äußeren Kupplungsbahn in Abhängigkeit von einer vorbestimmten Bewegung der Bremsbetätigungsmittel, wobei die Gegenfläche der äußeren Kupplungsbahn im wesentlichen glatt ist; und

d) in der Gegenfläche der inneren Kupplungsbahn ausgebildete rampenförmige Ausnehmungen (68), die von einer ersten, sich im wesentlichen radial erstreckenden Endwand (86) mit einer ersten Höhe (88) sowie einer sich in Umfangsrichtung erstreckenden und radial geneigten Rampenfläche (72) begrenzt sind, die sich von dem von den Gegenflächen weiter entfernten Ende der ersten Endwand radial nach außen zu den Gegenflächen in Richtung der vorgegebenen Drehrichtung bis zu einer im wesentlichen radial verlaufenden zweiten Endwand (82) erstrecken, die eine zweite Höhe (90) in radialer Richtung aufweist, die kleiner als die erste Höhe ist;

e) jeweils ein in jeder der rampenförmigen Ausnehmungen enthaltenes Rollenglied (66), das einen Durchmesser (92) aufweist, der kleiner ist als der radiale Abstand, den die Schnittkante der ersten Endwand mit der Rampenfläche von der glatten Gegenfläche hat, und der größer ist als der radiale Abstand, den die Schnittkante der zweiten Endwand mit der Rampenfläche von der glatten Gegenfläche hat, wobei die Rollenglieder eine erste Stellung in Umfangsrichtung gegenüber den rampenförmigen Ausnehmungen auf die zweiten Endwände zu aufweisen, in der die Rollenglieder sich zwischen der inneren und der äußeren Kupplungsbahn einklemmen, um eine drehfeste Verbindung zwischen diesen in der gegebenen Drehrichtung zu erzeugen, sowie eine zweite Stellung in Umfangsrichtung gegenüber den rampenförmigen Ausnehmungen in Richtung auf die erste Endwand zu aufweisen, um es der einen Kupplungsbahn zu ermöglichen, sich frei von der anderen Kupplungsbahn und den Rollengliedern zu drehen;

f) Vorspannmittel (70), die die Rollenglieder in Umfangsrichtung auf die zweiten Endwände in den Reibeingriff mit der glatten Gegenfläche sowie den Rampenflächen zu vorspannen, so daß eine Drehung der einen Kupplungsbahn in die gegebene Drehrichtung bestrebt ist, ein Rollen der Rollenglieder auf der Rampenfläche auf die zweite Endwand zu zu bewirken; gekennzeichnet durch

g) Verbindungsglieder (76), die mit einem ihrer Enden je in einer rampenförmigen Ausnehmung gegenüber dieser in Umfangsrichtung beweglich aufgenommen sind,

die in Umfangsrichtung zwischen den Rollengliedern und der zweiten Endwand angeordnet sind,

die mit den Rollengliedern in Eingriff bringbar sind, um mit den Rollengliedern in die gegebene Drehrichtung um die Achse umzulaufen,

deren andere Enden an dem drehbaren Einstellglied befestigt sind, um mit diesem in beide Drehrichtungen um die Achse umzulaufen, wobei der Drehwiderstand der Verbindungsglieder in die gegebene Drehrichtung um die Achse ausreicht, um die Vorspannung der Vorspannmittel sowie die Neigung der Rollenglieder, sich auf der Rampenfläche in Richtung auf die erste Umfangsstellung infolge einer Drehung der äußeren Kupplungsbahn in die gegebene Drehrichtung zu wälzen, so weit zu überwinden, um es der äußeren Kupplungsbahn zu ermöglichen, frei von der inneren Kupplungsbahn und den Rollengliedern umzulaufen, und wobei der Drehwiderstand größer ist als das Drehmoment, das erforderlich ist, um das Einstellglied zu drehen, wenn die Reibflächen der Bremse nicht in Anlage sind, jedoch kleiner ist als das Drehmoment, das notwendig ist, um das Einstellglied zu drehen, wenn die Reibflächen der Bremse miteinander in Berührung stehen; und

h) daß Mittel (104) vorhanden sind, um einen vorbestimmten toten Gang zwischen den Mitteln zum Drehen der äußeren Kupplungsbahn sowie des Einstellgliedes zu erzeugen, wobei der tote Gang eine vorbestimmte Bewegung der Bremsbetätigungsmittel ohne Drehung des Einstellgliedes in die gegebene Drehrichtung ermöglicht.

9. Nachstellvorrichtung nach Anspruch 8, bei der die Vorspannmittel Federn enthalten, die zwischen der ersten Endwand und den Rollengliedern angeordnet sind.

10. Nachstellvorrichtung nach Anspruch 8 oder 9, bei der das Einstellglied einem Reibwiderstand gegen Verdrehung unterliegt und das Drehmomentübertragungsvermögen der Antriebsanordnung in der anderen Drehrichtung kleiner ist als das Drehmoment, das nötig ist, um den Reibwiderstand gegen Verdrehung des Einstellgliedes in die andere Drehrichtung zu überwinden.

## Revendications

1. Ensemble d'entrainement à couplage unidirectionnel à limitation de couple (58) pour entrainer en rotation un élément (50) tournant autour d'un axe dans un sens de rotation donné en agissant contre une résistance inférieure à une résistance prédéterminée à la rotation dudit élément tournant dans ledit sens de rotation, ledit ensemble comportant:

a) une piste intérieure de couplage (62) qui définit une surface diamétralement extérieure de confrontation, de forme générale cylindrique, ladite piste intérieure de couplage pouvant tourner autour dudit axe;

b) une surface extérieure de couplage (64) qui définit une surface diamétralement intérieure de confrontation (74), de forme générale annulaire, qui entoure ladite surface diamétralement extérieure de confrontation, de forme générale cylindrique et qui en est radialement espacée, ladite piste extérieure de couplage pouvant tourner autour dudit axe;

c) des moyens d'entrainement (94—102) pour entrainer en rotation l'une, mentionnée en premier lieu, desdites pistes de couplage, intérieure et extérieure, la surface de confrontation (74) de ladite piste de couplage mentionnée en premier lieu étant sensiblement lisse;

d) des cavités (68) prévues dans la surface de confrontation, de l'autre desdites pistes de couplage, intérieure et extérieure;

e) un élément de coincement (66, 242, 306) logé dans chacune desdites cavités, lesdits éléments de coincement ayant, par rapport auxdites cavités, une première position circonférentielle dans laquelle ledit élément de coincement va se coincer entre ladite piste intérieure de couplage et ladite piste extérieure de couplage pour assurer une connexion, sans possibilité de rotation relative, entre elles dans un sens de rotation mentionné en premier lieu; et ayant, par rapport auxdites cavités, une seconde position circonférentielle qui permet à ladite piste de couplage mentionnée en premier lieu de tourner indépendamment de ladite autre piste de couplage et desdits éléments de coincement;

f) un moyen de contrainte (70) qui contraint lesdits éléments de coincement circonférentiellement en direction de ladite première position circonférentielle, ce par quoi la rotation de ladite piste de couplage, mentionnée en premier lieu, dans ledit sens donné de rotation va tendre à faire en sorte que lesdits éléments de coincement vont se coincer entre lesdites surfaces qui font face (72, 74); caractérisé en ce que:

g) ledit sens de rotation mentionné en premier lieu est dans ledit sens donné de rotation, la connexion d'entrainement étant ainsi prévue dans ledit sens donné; et en ce que des éléments de connexion (76, 244, 308) sont prévus, chacun ayant l'une de ses extrémités (80) logée, avec possibilité de mouvement relatif circonférentiellement, entre lesdites surfaces (72, 74) de confrontation, lesdits éléments de connexion étant circonférentiellement interposés entre lesdits éléments de coincement et pouvant venir au contact desdits éléments de coincement pour tourner avec lesdits éléments de coincement (66) autour dudit axe dans ledit sens donné de rotation, l'autre extrémité (78) desdits éléments de connexion étant fixée audit élément tournant (50) pour tourner autour dudit axe avec lui dans les deux sens de rotation, la résistance à la rotation autour dudit axe dans ledit sens donné de rotation desdits éléments de connexion faisant que lesdits éléments de connexion viennent au contact desdits éléments de coincement pour empêcher lesdits éléments de coincement de se déplacer circonférentiellement en direction de ladite position de coincement sous l'action à la fois de la contrainte desdits éléments de contrainte et de la tendance desdits éléments de coincement à se déplacer en direction de ladite position de coincement.

2. L'ensemble d'entrainement de la revendication 1, dans lequel la résistance à la rotation dudit élément tournant (50) dans ledit sens de rotation donné, égale à ladite résistance prédéterminée à la rotation, ou dépassant cette résistance, va se traduire par le fait que lesdits éléments de connexion vont venir au contact desdits éléments de coincement avec une résistance suffisante pour surmonter à la fois la contrainte desdits éléments de contrainte et la tendance desdits éléments de coincement à se déplacer en direction de ladite première position circonférentielle, suffisamment pour permettre à ladite piste de couplage, mentionnée en premier lieu, de tourner indépendamment de ladite autre piste de couplage et desdits éléments de coincement.

3. L'ensemble d'entrainement de la revendication 2, dans lequel lesdites cavités comportent des cavités à rampe (68) venues de forme dans la surface de confrontation, de l'autre desdites pistes de couplage, intérieure et extérieure, lesdites cavités à rampe étant définies par une première paroi d'extrémité (86) qui s'étend de façon générale radialement et qui présente une première hauteur (88), ainsi que par une surface à rampe inclinée radialement et s'étendant circonférentiellement (72) qui s'étend, en partant de l'extrémité de ladite première paroi d'extrémité la plus éloignée desdites surfaces de confrontation, radialement en direction desdites surfaces de confrontation, dans le sens dudit sens donné de rotation, jusqu'à une seconde paroi d'extrémité (82) qui s'étend de façon générale radialement et qui présente une seconde hauteur radiale (90), ladite seconde hauteur étant inférieure à ladite première hauteur;

dans lequel lesdits éléments de coincement comportent chacun un élément formant rouleau (66) qui se loge dans chacune desdites cavité à rampe, ledit élément formant rouleau ayant un diamètre (92) inférieur à la distance radiale entre l'intersection de ladite première paroi d'extrémité et de ladite surface à rampe d'une part et ladite surface lisse de confrontation d'autre part, et supérieur à la distance radiale entre l'intersection de ladite seconde paroi d'extrémité et de ladite surface à rampe d'une part et ladite surface lisse de confrontation d'autre part, lesdits éléments formant rouleaux ayant une première position circonférentielle, par rapport auxdites cavités à rampe, en direction de ladite seconde paroi d'extrémité, dans laquelle lesdits éléments formant rouleau vont se coincer entre ladite piste intérieure de couplage et ladite piste extérieure de couplage pour réaliser une connexion d'entrainement entre elles dans ledit sens donné de rotation, ainsi qu'une seconde position circonférentielle, par rapport auxdites cavités à rampe, en direction de ladite première paroi d'extrémité, position qui permet à ladite piste de couplage mentionnée en premier lieu de tourner indépendamment de ladite autre piste de couplage et desdits éléments formant rouleaux; et

dans lequel lesdits éléments de connexion ont chacun une extrémité qui se loge de façon relativement mobile circonférentiellement dans chacune desdites cavités à rampe, lesdits éléments de connexion étant circonférentiellement interposés entre lesdits éléments formant rouleaux et ladite seconde paroi d'extrémité, lesdits éléments de connexion pouvant venir au contact desdits éléments formant rouleaux pour tourner avec lesdits éléments formant rouleaux autour dudit axe dans ledit sens donné de rotation.

4. L'ensemble d'entrainement de la revendication 3, dans lequel lesdits moyens de contrainte comportent des ressorts interposés entre ladite première paroi d'extrémité et lesdits éléments formant rouleaux.

5. L'ensemble d'entrainement de la revendication 4, dans lequel lesdits ressorts sont des ressorts à lame.

6. L'ensemble d'entrainement de la revendication 4 ou 5, dans lequel ladite piste extérieure est ladite piste mentionnée en premier lieu, ladite piste intérieure est ladite autre piste et dans lequel les surfaces en rampe s'étendent radialement vers l'extérieur dans ledit sens donné de rotation.

7. L'ensemble d'entrainement de la revendication 2, dans lequel lesdites cavités sont des cavités pour pivotement (312) et dans lequel lesdits éléments de coincement sont chacun un élément formant sabot (306) logé, avec possibilité de pivotement, dans chacune desdites cavités de pivotement, lesdits éléments formant sabot ayant une longueur supérieure à la distance radiale entre lesdites cavités et ladite surface lisse de confrontation, lesdits éléments formant sabot présentant, par rapport auxdites cavités, une première position de pivotement dirigée dans ledit sens donné de rotation et dans laquelle lesdits éléments formant sabot vont se coincer entre ladite piste intérieure de couplage et ladite piste extérieure de couplage pour réaliser une connexion d'entrainement entre elles dans ledit sens donné de rotation, ainsi qu'une seconde position de pivotement, par rapport auxdites cavités, qui permet à ladite piste de couplage, mentionnée en premier lieu, de tourner indépendamment de ladite autre piste de couplage et desdits éléments formant sabot.

8. Dispositif d'ajustement automatique du jeu, par détection de la garde de fonctionnement, à simple action (10) pour maintenir une garde de fonctionnement prédéterminée (38) entre les surfaces de friction (32—34), que l'on peut faire venir sélectivement en contact, d'un frein qui comprend un moyen mobile de manoeuvre du frein (26), un élément tournant d'ajustement (50), la rotation dudit élément d'ajustement autour de son axe dans un sens donné de rotation intervenant pour diminuer le jeu dans le frein et dans l'autre sens de rotation pour augmenter le jeu dans le frein, et qui comprend un ensemble d'entrainement unidirectionnel à limitation de couple (58) pour entrainer en rotation ledit élément d'ajustement dans ledit sens donné de rotation; ledit ensemble d'entrainement comporte:

a) une piste intérieure de couplage (62) qui d'éfinit une surface diamétralement extérieure de confrontation (74), de forme générale annulaire, ladite piste intérieure de couplage pouvant tourner autour dudit axe;

b) une surface extérieure de couplage (64) qui définit une surface diamétralement intérieure de confrontation (74), de forme générale annulaire, qui entoure ladite surface diamétralement extérieure de confrontation et qui en est radialement espacée, ladite piste extérieure de couplage pouvant tourner autour dudit axe;

c) des moyens (94—102) pour entrainer automatiquement en rotation ladite piste extérieure de couplage en réponse à un déplacemet prédéterminé dudit moyen de manoeuvre du frein, la surface de confrontation de ladite piste extérieure de couplage étant

d) substantiellement lisse; des cavités à rampe (68) venues de forme dans la surface de confrontation de la piste intérieure de couplage, lesdites cavités à rampe étant définies par une première paroi d'extrémité (86) qui s'étend de façon générale radialement et qui présente une première hauteur radiale (88), une surface à rampe (72) inclinée radialement, s'étendant circonférentiellement, à partir de l'extrémité de ladite première paroi d'extrémité la plus éloignée desdites surfaces de confrontation, radialement vers l'extérieur en direction desdites surfaces de confrontation, dans le sens dudit sens donné de rotation, jusqu'à une seconde paroi d'extrémité (82) qui s'étend de façon générale radialement et qui présente une seconde hauteur radiale (90), ladite seconde hauteur étant inférieure à ladite première hauteur;

e) un élément formant rouleau (66) se logeant dans chacune desdites cavités à rampe, lesdits éléments formant rouleau ayant un diamètre (92) inférieur à la distance radiale entre l'intersection de ladite première paroi d'extrémité et de ladite surface à rampe d'une part et ladite surface lisse de confrontation d'autre part, et supérieur à la distance radiale entre l'intersection de ladite seconde paroi d'extrémité et de ladite surface à rampe d'autre part et ladite surface lisse de confrontation d'autre part, lesdits éléments formant rouleaux ayant une première position circonférentielle, par rapport auxdites cavités à rampe, en direction de ladite seconde paroi d'extrémité, dans laquelle lesdits éléments formant rouleau vont se coincer entre ladite piste intérieure de couplage et ladite piste extérieure de couplage pour réaliser une connexion d'entrainement entre elles dans ledit sens donné de rotation, ainsi qu'une seconde position circonférentielle, par rapport auxdites cavités à rampe, en direction de ladite première paroi d'extrémité, position qui permet à la dite piste de couplage, mentionnée en premier lieu, et auxdits éléments formant rouleaux;

f) un moyen de contrainte (70) qui contraint lesdits éléments formant rouleaux circonférentiellement en direction desdites secondes parois d'extrémité pour les faire venir en contact de friction avec ladite surface lisse de confrontation et avec lesdites surfaces à rampe, ce par quoi la rotation de ladite piste de couplage, mentionnée en premier lieu, dans ledit sens donné de rotation, va tendre à faire en sorte que lesdits éléments formant rouleaux vont rouler sur ladite surface à rampe en direction de ladite seconde paroi d'extrémité; caractérisé en ce que

g) un élément de connexion (76) présente l'une de ses extrémités logée, avec possibilité de mouvement relatif circonférentiellement, dans ladite cavité à rampe, ledit élément de connexion étant circonférentiellement interposé entre lesdits éléments formant rouleaux et ladite seconde paroi d'extrémité, lesdits éléments de connexion pouvant être mis en contact avec lesdits éléments formant rouleaux pour tourner avec lesdits éléments formant rouleaux autour dudit axe dans ledit sens donné de rotation, l'autre extrémité desdits éléments de connexion étant fixée audit élément tournant d'ajustement pour tourner avec lui autour dudit axe dans les deux sens de rotation, la résistance à la rotation desdits éléments de connexion autour dudit axe dans ledit sens donné de rotation étant suffisante pour surmonter la contrainte dudit élément de contrainte et la tendance desdits rouleaux à rouler sur ladite surface à rampe en direction de ladite première position circonférentielle, comme conséquence du fait que la rotation de ladite piste extérieure de couplage dans ledit sens donné de rotation est suffisante pour permettre à ladite piste extérieure de couplage de tourner indépendamment de ladite piste intérieure de couplage et du fait que lesdits éléments formant rouleaux sont supérieurs au couple nécessaire pour faire tourner ledit élément d'ajustement lorsque lesdites surfaces de friction du frein ne sont pas en contact mais inférieurs au couple nécessaire pour faire tourner ledit élément d'ajustement lorsque lesdites surfaces de friction du frein sont en contact; et

h) un moyen (104) pour assurer une course à vide prédéterminée entre ledit moyen pour entrainer en rotation ladite piste extérieure de couplage et ledit élément d'ajustement, ladite course à vide prédéterminée permettant un déplacement prédéterminé dudit moyen de manoeuvre du frein sans rotation dudit élément d'ajustement dans ledit sens donné de rotation.

9. Le dispositif d'ajustement de la revendication 8, dans lequel ledit moyen de contrainte est constitué de ressorts interposés entre lesdites premières parois d'extrémité et lesdits éléments formant rouleaux.

10. Le dispositif d'ajustement de la revendication 8 ou 9, dans lequel ledit élément d'ajustement est soumis à une résistance de frottement à l'encontre d'une rotation et dans lequel la capacité de transfert de couple dudit élément d'entrainement dans ledit autre sens de rotation est inférieure au couple nécessaire pour surmonter ladite résistance de frottement en rotation dudit élément d'ajustement dans ledit autre sens de rotation.

Fig. 1

Fig. IA

Fig. 3A

Fig. 4

Fig. 2

Fig. 2A

Fig. 3